(19) Europäisches Patentamt
European Patent Office
Office européen des brevets

(11) **EP 2 593 484 B1**

## (12) FASCICULE DE BREVET EUROPEEN

(45) Date de publication et mention de la délivrance du brevet:
**22.04.2015   Bulletin 2015/17**

(21) Numéro de dépôt: **11748723.1**

(22) Date de dépôt: **08.07.2011**

(51) Int Cl.:
*C08C 19/20* (2006.01)    *C08L 95/00* (2006.01)
*C08F 8/34* (2006.01)    *C08J 3/24* (2006.01)
*C08L 51/04* (2006.01)    *C08F 297/04* (2006.01)

(86) Numéro de dépôt international:
**PCT/IB2011/053060**

(87) Numéro de publication internationale:
**WO 2012/007889 (19.01.2012 Gazette 2012/03)**

(54) **PROCEDE DE PREPARATION DE POLYMERES GREFFES SANS AMORCEUR ET SANS SOLVANT ET COMPOSITIONS BITUME/POLYMERE COMPRENANT LESDITS POLYMERES GREFFES**

HERSTELLUNGSPROZESS FÜR OHNE INITIATOR UND LÖSUNGSMITTEL GEPFROPFTE POLYMERE SOWIE BITUMENPOLYMER WELCHES DIE GEPFROPFTEN POLYMERE BEINHALTET

PREPARATION PROCESS FOR GRAFTED POLYMERS WITHOUT INITIATOR AND SOLVANT AND BITUMEN/POLYMER COMPRISING THE GRAFTED POLYMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **12.07.2010   FR 1055674**

(43) Date de publication de la demande:
**22.05.2013   Bulletin 2013/21**

(73) Titulaires:
• **TOTAL MARKETING SERVICES**
  **92800 Puteaux (FR)**
• **Centre National de la Recherche Scientifique**
  **75794 Paris Cedex 16 (FR)**

(72) Inventeurs:
• **HARDERS, Sylvia**
  **25712 Buchholz (DE)**
• **BOTEL, Romuald**
  **38121 Chonas L'Amballan (FR)**
• **ILIOPOULOS, Ilias**
  **F-75012 Paris (FR)**
• **LEIBLER, Ludwik**
  **F-75006 Paris (FR)**
• **ZOVI, Ornella, Annabelle**
  **F-79510 Coulon (FR)**

(74) Mandataire: **Hirsch & Associés**
  **137, rue de l'Université**
  **75007 Paris (FR)**

(56) Documents cités:
**EP-A1- 0 464 478    FR-A1- 2 854 404**
**FR-A1- 2 919 294    FR-A1- 2 929 616**
**GB-A- 1 283 613**

EP 2 593 484 B1

**Description**

**DOMAINE TECHNIQUE**

La présente invention appartient au domaine des bitumes, en particulier au domaine des compositions bitume/polymère. La présente invention concerne un procédé de préparation de polymères greffés en l'absence de solvant et en l'absence d'amorceur radicalaire extérieur et les polymères greffés susceptibles d'être obtenus par ledit procédé. Lesdits polymères greffés sont particulièrement avantageux et utilisables dans le domaine des bitumes, et en particulier dans le domaine des compositions bitume/polymère.

L'invention concerne aussi les compositions bitume/polymère comprenant du bitume et lesdits polymères greffés et leur procédé de préparation.

L'invention concerne enfin l'utilisation desdits polymères greffés pour préparer des compositions bitume/polymère, lesdites compositions bitume/polymère étant réticulées, de préférence de manière thermoréversible.

**ART ANTERIEUR**

Dans les demandes WO200930840 et WO200930841, la société demanderesse a décrit des polymères greffés obtenus à partir de la réaction entre des polymères, en particulier des copolymères à base de motifs diène conjugué et de motifs hydrocarbure monovinyl aromatique et des dérivés thiols. La réaction de greffage des dérivés thiols sur les polymères est décrite page 13 lignes 26 à 29 pour la demande WO200930840 et page 13 lignes 7 à 10 pour la demande WO200930841. La réaction de greffage a lieu dans un réacteur, sous atmosphère d'azote, en présence d'un solvant tel que le toluène, à une température de 90°C, sous agitation, pendant une durée de 3 à 4 heures, en présence d'un polymère, d'un dérivé thiol qui joue le rôle de greffon et d'un amorceur radicalaire tel que l'azobisisobutyronitrile (AIBN).

**RESUME DE L'INVENTION**

Dans la continuité de ses travaux, la société demanderesse s'est aperçue que le procédé de préparation de polymères greffés à l'aide de dérivés thiols pouvait être simplifié et même amélioré.

Ainsi, la société demanderesse s'est aperçue que la réaction de greffage entre un polymère à base de motifs diène conjugué, en particulier un copolymère à base de motifs diène conjugué et de motifs hydrocarbure monovinyl aromatique, tel qu'un copolymère de styrène et de butadiène, et un dérivé thiol, en particulier un dérivé thiol paraffinique pouvait avoir lieu en l'absence de tout solvant et en l'absence de tout amorceur radicalaire externe, qu'il soit photochimique, thermique et/ou redox, ce qui simplifie grandement la mise en oeuvre du procédé de préparation des polymères greffés, et par conséquent la mise en oeuvre du procédé de préparation des compositions bitume/polymère comprenant lesdits polymères greffés.

Ce nouveau procédé de préparation est donc plus simple à mettre en oeuvre et ne nécessite pas l'utilisation de solvants inflammables, tels que le toluène ou de produits explosifs tels que l'AIBN.

De plus, ce nouveau procédé de préparation permet d'obtenir des rendements de greffage aussi élevés, voire plus élevés que ceux obtenus lors du greffage en présence de solvant et d'amorceur radicalaire.

Le procédé selon l'invention permet d'obtenir des polymères greffés utilisables dans le domaine des bitumes, et en particulier dans le domaine des compositions bitume/polymère.

Les compositions bitume/polymère comprenant lesdits polymères greffés présentent de bonnes propriétés mécaniques et élastiques. Les polymères greffés permettent de réticuler les compositions bitume/polymère et ce de manière thermoréversible. Les compositions bitume/polymère selon l'invention ont une viscosité faible, ce qui permet de les manipuler à plus basses températures et permet de diminuer les températures de fabrication des enrobés fabriqués à partir desdites compositions bitume/polymère.

Le nouveau procédé de préparation des compositions bitume/polymère est lui aussi plus facile à mettre en oeuvre, puisque la préparation des polymères greffés, première étape du procédé de préparation des compositions bitume/polymère, est simplifiée.

**BREVE DESCRIPTION**

L'invention a pour objet un procédé de préparation de polymères greffés en l'absence de solvant et de source radicalaire comprenant les étapes suivantes :

(i) on met en contact un dérivé thiol et un polymère à base de motifs diène conjugué à une température comprise entre 20°C et 120°C, pendant une durée de 10 minutes à 24 heures, puis
(ii) on porte le mélange à une température comprise entre 80°C et 200°C pendant une durée de 10 minutes à 48 heures.

De préférence, la température de l'étape (i) est comprise entre 30°C et 110°C, de préférence entre 40°C et 100°C, plus préférentiellement entre 50°C et 90°C, encore plus préférentiellement entre 60°C et 80°C.

De préférence, la durée de l'étape (i) est comprise entre 30 minutes et 12 heures, de préférence entre 1 heure et 10 heures, plus préférentiellement entre 2 heures et 8 heures, encore plus préférentiellement entre 4 heures et 6 heures.

De préférence, la température de l'étape (ii) est comprise entre 100°C et 160°C, de préférence entre 120°C et 140°C.

De préférence, la durée de l'étape (ii) est comprise entre 30 minutes et 24 heures, de préférence entre 1 heure et 12 heures, plus préférentiellement entre 2 heures et 10 heures, encore plus préférentiellement entre 4 heures et 8 heures.

De préférence, une étape ultérieure de purification est mise en oeuvre.

De préférence, les étapes (i) et/ou (ii) sont effectuées sous agitation.

De préférence, le dérivé thiol a pour formule générale $C_nH_{2n+1}$-SH avec n un entier compris entre 12 et 110, de préférence entre 18 et 90, plus préférentiellement entre 22 et 80, encore plus préférentiellement entre 40 et 70.

De préférence, le polymère est un copolymère à base de motifs diène conjugué et de motifs hydrocarbure monovinyl aromatique.

De préférence, le diène conjugué est choisi parmi le butadiène, le 2-méthyl-1,3-butadiène (isoprène), le 2,3-diméthyl-1,3-butadiène, le 1,3-pentadiène et le 1,2-hexadiène, chloroprène, butadiène carboxylé, isoprène carboxylé, et leurs mélanges, en particulier le butadiène.

De préférence, le polymère à base de motifs diène conjugué possède une teneur en motifs à doubles liaisons 1-2 issus du diène conjugué entre 5% et 50% en masse, par rapport à la masse totale des motifs diène conjugué, de préférence entre 10% et 40%, plus préférentiellement entre 15% et 30%, encore plus préférentiellement entre 20% et 25%, encore plus préférentiellement entre 18% et 23%.

De préférence, le rapport molaire entre la quantité de dérivé thiol et la quantité de motifs à doubles liaisons 1-2 issus du diène conjugué est compris entre 0,01 et 5, de préférence entre 0,05 et 4, plus préférentiellement entre 0,1 et 2, encore plus préférentiellement entre 0,5 et 1,5, encore plus préférentiellement entre 0,8 et 1.

De préférence, l'hydrocarbure monovinyl aromatique est choisi parmi le styrène, l'o-méthyl styrène, le p-méthyl styrène, le p-tert-butylstyrène, le 2,3 diméthyl-styrène, l'α-méthyl styrène, le vinyl naphtalène, le vinyl toluène, le vinyl xylène, et leurs mélanges, en particulier le styrène.

L'invention concerne aussi, un polymère greffé susceptible d'être obtenu par le procédé tel que défini ci-dessus.

De préférence, le polymère greffé possède un indice de polydispersité compris entre 1 et 4, de préférence entre 1,1 et 3, plus préférentiellement entre 1,2 et 2, encore plus préférentiellement entre 1,5 et 1,7.

L'invention concerne aussi une composition bitume/polymère comprenant au moins un bitume et au moins un polymère greffé susceptible d'être obtenu par le procédé tel que défini ci-dessus.

De préférence, la composition bitume/polymère comprend de 0,1% à 30% en masse de polymère greffé par rapport à la masse de la composition bitume/polymère, de préférence entre 0,5% et 20%, plus préférentiellement entre 1% et 10%, encore plus préférentiellement entre 2% et 5%.

L'invention concerne aussi un procédé de préparation d'une composition bitume/polymère dans lequel on mélange à une température comprise entre 100°C et 200°C, de préférence entre 120°C et 180°C, plus préférentiellement entre 140°C et 160°C, jusqu'à l'obtention d'une composition bitume/polymère finale réticulée, au moins un bitume et au moins un polymère greffé susceptible d'être obtenu par le procédé tel que défini ci-dessus.

L'invention concerne aussi l'utilisation d'au moins un polymère greffé susceptible d'être obtenu par le procédé tel que défini ci-dessus pour préparer une composition bitume/polymère réticulée, de préférence de manière thermoréversible.

L'invention concerne aussi un enrobé bitumineux comprenant des granulats et une composition bitume/polymère telle que définie ci-dessus.

**DESCRIPTION DETAILLEE**

Le procédé selon l'invention met en oeuvre au moins un polymère. Ce polymère est un polymère à base de motifs diène conjugué, de préférence un copolymère à base de motifs diène conjugué et de motifs hydrocarbure monovinyl aromatique.

Le diène conjugué est choisi parmi ceux comportant de 4 à 8 atomes de carbone, tel que le 1-3 butadiène (butadiène), le 2-méthyl-1,3-butadiène (isoprène), le 2,3-diméthyl-1,3-butadiène, le 1,3-pentadiène, le 1,2-hexadiène, le chloroprène, le butadiène carboxylé et/ou l'isoprène carboxylé. De préférence, le diène conjugué est le butadiène. Le polymère peut par exemple être un polybutadiène.

L'hydrocarbure monovinyl aromatique est choisi parmi le styrène, l'o-méthyl styrène, le p-méthyl styrène, le p-tert-butylstyrène, le 2,3 diméthyl- styrène, l'α-méthyl styrène, le vinyl naphtalène, le vinyl toluène et/ou le vinyl xylène. De préférence, l'hydrocarbure monovinyl est le styrène. Le polymère peut par exemple être un copolymère de styrène et de butadiène.

De préférence, le polymère selon l'invention consiste en un ou plusieurs copolymères choisis parmi les copolymères d'hydrocarbure monovinyl aromatique et de diène conjugué, en particulier de styrène et de butadiène.

Ces copolymères d'hydrocarbure monovinyl aromatique et de diène conjugué, en particulier de styrène et de butadiène, peuvent être linéaires et/ou étoilés, sous forme de dibloc, tribloc et/ou multibranchés.

Ces copolymères d'hydrocarbure monovinyl aromatique et de diène conjugué, en particulier de styrène et de butadiène, comprennent éventuellement une charnière statistique.

De préférence le polymère est un copolymère dibloc ou tribloc d'hydrocarbure monovinyl aromatique et de diène conjugué, en particulier un copolymère dibloc ou tribloc de styrène et de butadiène.

Le copolymère d'hydrocarbure monovinyl aromatique et de diène conjugué, en particulier de styrène et de butadiène, possède avantageusement une teneur pondérale en hydrocarbure monovinyl aromatique, en particulier en styrène allant de 5% à 50% en masse, par rapport à la masse de copolymère, de préférence de 20% à 40%.

Le copolymère d'hydrocarbure monovinyl aromatique et de diène conjugué, en particulier de styrène et de butadiène, possède avantageusement une teneur pondérale en diène conjugué, en particulier en butadiène allant de 50% à 95% en masse, par rapport à la masse de copolymère, de préférence de 60% à 80%. Ce sont sur ces motifs diènes conjugués que va réagir le dérivé thiol.

Parmi ces motifs diène conjugué, on distingue les motifs à doubles liaisons 1-4 issus du diène conjugué et les motifs à doubles liaisons 1-2 issus du diène conjugué. Par motifs à doubles liaisons 1-4 issus du diène conjugué, on entend les motifs obtenus via une addition 1,4 lors de la polymérisation du diène conjugué. Par motifs à doubles liaisons 1-2 issus du diène conjugué, on entend les motifs obtenus via une addition 1,2 lors de la polymérisation du diène conjugué. Le résultat de cette addition 1,2 est une double liaison vinylique dite « pendante ». Ce sont sur ces motifs 1-4 issus du diène conjugué et/ou 1-2 issus du diène conjugué que va réagir le dérivé thiol. En particulier, les doubles liaisons vinyliques pendantes sont particulièrement réactives et la réaction de greffage a lieu préférentiellement sur ces doubles liaisons vinyliques pendantes.

De préférence, le copolymère d'hydrocarbure monovinyl aromatique et de diène conjugué, en particulier de styrène et de butadiène, possède une teneur en motifs à doubles liaisons 1-2 issus du diène conjugué, en particulier issus du butadiène, comprise entre 5% et 50% en masse, par rapport à la masse totale des motifs diène conjugué, en particulier butadiène, de préférence entre 10% et 40%, plus préférentiellement entre 15% et 30%, encore plus préférentiellement entre 20% et 25%, encore plus préférentiellement entre 18% et 23%.

Le polymère selon l'invention, en particulier le copolymère d'hydrocarbure monovinyl aromatique et de diène conjugué, en particulier de styrène et de butadiène, a une masse moléculaire moyenne $M_w$ comprise entre 10 000 et 500 000 daltons, de préférence entre 50 000 et 200 000, plus préférentiellement entre 80 000 et 150 000, encore plus préférentiellement entre 100 000 et 130 000, encore plus préférentiellement entre 110 000 et 120 000. La masse moléculaire du copolymère est mesurée par chromatographie GPC avec un étalon polystyrène selon la norme ASTM D3536.

Le procédé selon l'invention met en oeuvre au moins un greffon qui est un dérivé thiol. Ce greffon ou dérivé thiol comprend au moins une chaîne hydrocarbonée saturée, linéaire ou ramifiée, d'au moins 12 atomes de carbone, de préférence d'au moins 18 atomes de carbone, plus préférentiellement d'au moins 22 atomes de carbone, encore plus préférentiellement d'au moins 30 atomes de carbone, encore plus préférentiellement d'au moins 40 atomes de carbone.

Plus particulièrement, le dérivé thiol ou greffon comprend au moins une chaîne hydrocarbonée saturée, linéaire ou ramifiée, de 12 à 110 atomes de carbone, de préférence de 18 à 90, plus préférentiellement de 22 à 80, encore plus préférentiellement de 40 à 70.

Plus particulièrement, le dérivé thiol ou greffon a pour formule générale la formule (1) suivante : $C_nH_{2n+1}$-SH avec n un entier compris entre 12 et 110, de préférence entre 18 et 90, plus préférentiellement entre 22 et 80, encore plus préférentiellement entre 40 et 70.

Parmi les dérivés thiols ou greffons préférés, figurent les thiols : $C_{18}H_{37}$-SH, $C_{40}H_{81}$-SH, $C_{70}H_{141}$-SH et $C_{90}H_{181}$-SH, avec une distribution centrée autour de ces valeurs. On préfère le thiol $C_{18}H_{37}$-SH disponible commercialement.

Le procédé selon l'invention se caractérise par une réaction entre le polymère décrit ci-dessus et le greffon décrit ci-dessus et ce en l'absence de tout solvant et d'amorceur radicalaire extérieurs, contrairement à ce qui a été décrit dans l'art antérieur. Le polymère et le greffon sont capables de réagir ensemble pour former un polymère greffé, il n'est pas nécessaire d'ajouter du solvant et/ou d'amorceur radicalaire.

Le procédé selon l'invention se caractérise par deux étapes réactionnelles successives. La première étape, consiste en un pré-mélange du polymère et du greffon, ce qui permet d'homogénéiser le polymère et le greffon dans des conditions douces. La seconde étape consiste en la réaction de greffage proprement dite, c'est-à-dire la réaction entre le polymère et le greffon pour former le polymère greffé dans des conditions un peu plus sévères qui vont entraîner le greffage du dérivé thiol sur les motifs diènes conjugués du polymère.

La première étape du procédé a lieu à une température comprise entre 20°C et 120°C, de préférence entre 30°C et 110°C, plus préférentiellement entre 40°C et 100°C, encore plus préférentiellement entre 50°C et 90°C, encore plus préférentiellement entre 60°C et 80°C. Les greffons utilisés dans le procédé, fondent aux températures mentionnées ci-dessus et permettent ainsi le gonflement du polymère. Les greffons étant liquides aux températures mentionnées ci-dessus, ils se comportent comme un solvant pour le polymère, ce qui fait que l'ajout d'un solvant supplémentaire n'est donc pas requis pour homogénéiser le mélange polymère/greffon. Si le dérivé thiol (ou greffon) possède une température de fusion supérieure aux températures mentionnées ci-dessus, le greffon n'est pas entièrement liquide et peut ne pas complètement gonfler le polymère. L'homogénéisation du mélange greffon/polymère est alors effectuée à l'aide par exemple d'un malaxeur ou d'une extrudeuse, ou de tout autre appareil permettant de mélanger des réactifs qui sont sous forme de solide et/ou de poudre.

On peut aussi éventuellement favoriser le gonflement et la solubilisation des réactifs, c'est-à-dire du polymère et du greffon, en ajoutant du solvant organique au polymère et au greffon, solvant qui est ensuite entièrement évaporé avant la deuxième étape de greffage.

De préférence, on utilise du toluène ou tout autre solvant organique usuel tel que le xylène, le chloroforme, le dichlorométhane, ou des alcanes légers tels que l'hexane, l'heptane, l'octane etc.

De préférence, la quantité de solvant organique est telle que la concentration massique en polymère est comprise entre 2 et 70% en masse, de préférence entre 4 et 50%, plus préférentiellement entre 5 et 30%, encore plus préférentiellement entre 8 et 20% dans ledit solvant. Ce solvant est ensuite évaporé. Le mélange polymère/greffon comprendra une quantité maximale de solvant de 10% en masse par rapport à la masse du mélange polymère/greffon, de préférence 5%, plus préférentiellement 3%, encore plus préférentiellement 1%.

On pourra aussi éventuellement utiliser une atmosphère inerte pour cette première étape du procédé, telle qu'une atmosphère inerte d'azote ou d'argon.

La première étape du procédé peut être effectuée avec ou sans agitation mécanique. On peut améliorer l'homogénéisation du mélange polymère/greffé en utilisant une agitation mécanique quelconque.

La durée de la première étape réactionnelle est comprise entre 10 minutes et 24 heures, de préférence entre 30 minutes et 12 heures, plus préférentiellement entre 1 heure et 10 heures, encore plus préférentiellement entre 2 heures et 8 heures, encore plus préférentiellement entre 4 heures et 6 heures. La durée de ce pré-mélange dépend de l'efficacité du système d'homogénéisation utilisé, que celui soit par exemple un réacteur muni d'une agitation mécanique, un malaxeur ou un simple réacteur sans agitation. Les durées seront ainsi plus importantes lorsque aucune agitation n'est présente et moins importantes dans le cas d'un malaxeur.

Le rapport massique entre les quantités de greffon et de polymère est compris entre 0,01 et 5, de préférence entre 0,05 et 4, plus préférentiellement entre 0,1 et 2, encore plus préférentiellement entre 0,5 et 1,5, encore plus préférentiellement entre 0,8 et 1.

Le rapport molaire entre les quantités de greffon et de motifs 1-2 issus du diène conjugué est compris entre 0,01 et 5, de préférence entre 0,05 et 4, plus préférentiellement entre 0,1 et 2, encore plus préférentiellement entre 0,5 et 1,5, encore plus préférentiellement entre 0,8 et 1.

La température de la seconde étape du procédé est comprise entre 80°C et 200°C, de préférence entre 100°C et 160°C, plus préférentiellement entre 120°C et 140°C.

Cette seconde étape de greffage ne nécessite pas l'utilisation d'amorceur radicalaire. Le greffage a lieu même sans l'utilisation d'amorceur radicalaire et ce de plus en limitant les réactions secondaires indésirées de couplage et de coupure de chaînes.

On pourra aussi éventuellement utiliser une atmosphère inerte pour cette seconde étape du procédé, telle qu'une atmosphère inerte d'azote, ou d'argon.

La seconde étape du procédé peut être effectuée avec ou sans agitation mécanique. On peut améliorer le greffage en utilisant une agitation mécanique quelconque.

La durée de la seconde étape réactionnelle est comprise entre 10 minutes et 48 heures, de préférence entre 30 minutes et 24 heures, plus préférentiellement entre 1 heure et 12 heures, encore plus préférentiellement entre 2 heures et 10 heures, encore plus préférentiellement entre 4 heures et 8 heures. La durée du greffage dépend de l'efficacité du système d'homogénéisation utilisé, que celui soit par exemple un réacteur muni d'une agitation mécanique, un malaxeur ou un simple réacteur sans agitation. Les durées seront ainsi plus importantes lorsque aucune agitation n'est présente et moins importantes dans le cas d'un malaxeur.

A la fin de cette seconde étape réactionnelle de greffage, on peut éventuellement purifier le polymère greffé obtenu par des techniques usuelles de purification, cette étape de purification n'est pas indispensable étant donné que le procédé selon l'invention permet de limiter la quantité de greffon n'ayant pas réagi. La purification du polymère greffé une fois les deux étapes réactionnelles achevées, peut être effectuée par exemple par précipitation dans un solvant tel que le méthanol.

On peut éventuellement ajouter au polymère greffé obtenu un agent anti-oxydant, tel que le 2,6-di-tert-butyl-4-méthylphénol. Cet agent anti-oxydant pourra être ajouté avec du solvant tel que le toluène, solvant qui est ensuite évaporé.

Ce nouveau procédé de préparation fournit des polymères greffés de pureté plus élevée qui peuvent ainsi être utilisés tels quels sans purification ultérieure.

Ce nouveau procédé de préparation fournit des polymères greffés qui présentent un indice de polydispersité moins élevé, la distribution des masses moléculaires est moins étendue, il y a moins de coupures de chaînes et/ou ramifications de chaînes. Le polymère greffé obtenu selon le procédé décrit ci-dessus présente un indice de polydispersité $I = M_w/M_n$ inférieur à celui d'un polymère greffé obtenu selon le procédé décrit dans l'art antérieur qui met en oeuvre un amorceur radicalaire et du solvant. Le polymère greffé obtenu selon le procédé décrit ci-dessus présente un indice de polydispersité compris entre 1 et 4, de préférence entre 1,1 et 3, plus préférentiellement entre 1,2 et 2, encore plus préférentiellement entre 1,5 et 1,7. Le polymère greffé selon l'invention est facilement différenciable d'un polymère greffé obtenu en solution, notamment par chromatographie à perméation de gel (GPC).

On définit par % molaire, la proportion d'un composé par rapport à l'ensemble des unités de répétition, par exemple styrène et butadiène, dans un copolymère tel qu'un copolymère de styrène et de butadiène.

On définit par % massique, la proportion d'un composé par rapport à la masse totale de copolymère greffé.

On définit par rendement de greffage, la quantité de dérivé thiol greffé par rapport à la quantité de dérivé thiol introduit.

Les rendements du procédé de greffage sont compris entre 10% et 99%, de préférence entre 20% et 90%, plus préférentiellement entre 30% et 80%, encore plus préférentiellement entre 40% et 70%, encore plus préférentiellement entre 50% et 60%.

Le bitume utilisable selon l'invention peut être un bitume issu de différentes origines. Le bitume utilisable selon l'invention peut être choisi parmi les bitumes d'origine naturelle, comme ceux contenus dans des gisements de bitume naturel, d'asphalte naturel ou les sables bitumineux. Le bitume utilisable selon l'invention peut aussi être un bitume ou un mélange de bitumes provenant du raffinage du pétrole brut tels que des bitumes de distillation directe ou des bitumes de distillation sous pression réduite ou encore des bitumes soufflés ou semi-soufflés, des résidus de désasphaltage au propane ou au pentane, des résidus de viscoréduction, ces différentes coupes pouvant être prises seules ou en mélange. Les bitumes utilisés peuvent également être des bitumes fluxés par addition de solvants volatils, de fluxants d'origine pétrolière, de fluxants carbochimiques et/ou de fluxants d'origine végétale. On peut aussi utiliser des bitumes synthétiques également appelés bitumes clairs, pigmentables ou colorables. Le bitume peut être un bitume d'origine naphténique ou paraffinique, ou un mélange de ces deux bitumes.

Les compositions bitume/polymère comprennent de 0,1 à 30% en masse, par rapport à la masse de composition bitume/polymère, de polymère greffé, de préférence de 0,5 à 20%, plus préférentiellement de 1 à 10%, encore plus préférentiellement de 2 à 5%.

Les autres polymères présents éventuellement dans les compositions bitume/polymère sont les polymères classiquement utilisables dans le domaine des compositions bitume/polymère comme par exemple, les copolymères triblocs d'un bloc hydrocarbure monovinyl aromatique et d'un bloc diène conjugué tels que les copolymères triblocs styrène/butadiène/styrène SBS, les copolymères blocs hydrocarbure monovinyl aromatique et d'un bloc diène conjugué multibranchés, tels que les copolymères blocs multibranchés styrène/butadiène $(SB)_nX$, les copolymères d'un bloc hydrocarbure monovinyl aromatique et d'un bloc diène conjugué « random » tels que les copolymères styrène/butadiène rubber SBR, les polybutadiènes, les polyisoprènes, les poudrettes de caoutchouc issues du recyclage des pneumatiques, les caoutchoucs butyle, les polyacrylates, les polyméthacrylates, les polychloroprènes, les polynorbornènes, les polybutènes, les polyisobutènes, les polyoléfines telles que les polyéthylènes, les polypropylènes, les copolymères d'éthylène et d'acétate de vinyle, les copolymères d'éthylène et d'acrylate de méthyle, les copolymères d'éthylène et d'acrylate de butyle, les copolymères d'éthylène et d'anhydride maléique, les copolymères d'éthylène et de métacrylate de glycidyle, les copolymères d'éthylène et d'acrylate de glycidyle, les copolymères d'éthylène et de propène, les terpolymères éthylène/propène/diène (EPDM), les terpolymères acrylonitrile/butadiène/styrène (ABS), les terpolymères éthylène/acrylate ou méthacrylate d'alkyle/acrylate ou méthacrylate de glycidyle et notamment les terpolymères éthylène/acrylate de méthyle/méthacrylate de glycidyle et les terpolymères éthylène /acrylate ou méthacrylate d'alkyle/anhydride maléique et notamment les terpolymères éthylène/acrylate de butyle/anhydride maléique.

En complément du bitume et des polymères greffés, d'autres ingrédients optionnels communément utilisés dans les bitumes peuvent être présents. Ces ingrédients pourront être des cires, telles que les cires de polyéthylène, les cires Fischer-Tropsch, des résines, des huiles de nature pétrolière et/ou végétale, des dopes d'adhésivité et/ou des acides tels que l'acide polyphosphorique et leurs dérivés.

Les compositions bitume/polymère sont préparées par mélange du polymère greffé et du bitume. Le mélange a lieu à une température comprise entre 100 et 200°C, de préférence entre 120°C et 180°C, plus préférentiellement entre 140°C et 160°C, pendant une durée de 30 minutes à 4 heures, de préférence de 1 heure à 2 heures, éventuellement sous agitation. Ce procédé de préparation de compositions bitume/polymère est très simple à mettre en oeuvre puisque le polymère greffé est obtenu grâce aux deux étapes réactionnelles décrites ci-dessus, sans amorceur extérieur et sans solvant, puis le polymère greffé est ajouté au bitume. Le procédé de préparation des compositions bitume/polymère se caractérise par les deux étapes (i) et (ii) décrites ci-dessous, suivies éventuellement d'une purification du polymère greffé, puis du mélange avec le bitume aux températures et durées indiquées ci-dessus.

Les polymères greffés obtenus selon le procédé décrit ci-dessus sont utilisables dans le domaine des bitumes, en application routière et/ou industrielle. Les polymères greffés permettent de formuler des compositions bitumineuses et en particulier des compositions bitume/polymère réticulées, de préférence de manière thermoréversible.

La réticulation des compositions bitume/polymère comprenant lesdits polymères greffés peut être mise en évidence en effectuant sur ces compositions bitume/polymère, des tests de traction selon la norme NF EN 13587. Les compositions bitume/polymère réticulées ont une résistance à la traction plus élevée que les compositions bitume/polymère non réticulées.

Une résistance à la traction plus élevée se traduit par un allongement à la rupture ou élongation maximale ($\varepsilon$ max en %) élevée, une contrainte à la rupture ou contrainte à l'élongation maximale ($\sigma$ $\varepsilon$ max en MPa) élevée, une énergie conventionnelle à 400% (E 400% en J/cm$^2$) élevée et/ou une énergie totale (E totale en J) élevée.

Les compositions bitume/polymère réticulées ont une élongation maximale, selon la norme NF EN 13587, supérieure ou égale à 400%, de préférence supérieure ou égale à 500%, plus préférentiellement supérieure ou égale à 600%, encore plus préférentiellement supérieure ou égale à 700%.

Les compositions bitume/polymère réticulées ont une contrainte à l'élongation maximale, selon la norme NF EN 13587, supérieure ou égale à 0,2 MPa, de préférence supérieure ou égale à 0,4 MPa, plus préférentiellement supérieure ou égale à 0,6 MPa, encore plus préférentiellement supérieure ou égale à 1 MPa.

Les compositions bitume/polymère réticulées ont une énergie conventionnelle à 400%, selon la norme NF EN 13587, supérieure ou égale à 3 J/cm$^2$, de préférence supérieure ou égale à 5 J/cm$^2$, plus préférentiellement supérieure ou égale à 10 J/cm$^2$, encore plus préférentiellement supérieure ou égale à 15 J/cm$^2$.

Les compositions bitume/polymère réticulées ont une énergie totale, selon la norme NF EN 13587, supérieure ou égale à 1 J, de préférence supérieure ou égale à 2 J, plus préférentiellement supérieure ou égale à 4 J, encore plus préférentiellement supérieure ou égale à 5 J.

La société demanderesse s'est aperçue que l'on pouvait obtenir des compositions bitume/polymère réticulées grâce aux polymères greffés obtenus par ledit procédé. Cet effet étant particulièrement prononcé lorsque le polymère greffé est synthétisé à partir d'un copolymère à base de motifs diène conjugué et de motifs hydrocarbure monovinyl aromatique qui possède une teneur en motifs à doubles liaisons 1-2 issus du diène conjugué supérieure ou égale à 5% en masse, par rapport à la masse totale des motifs diène conjugué, de préférence entre 5% et 50% en masse, plus préférentiellement entre 10% et 40%, encore plus préférentiellement entre 15% et 30%, encore plus préférentiellement entre 20% et 25%, encore plus préférentiellement entre 18% et 23%. De plus, les compositions bitume/polymère sont réticulées de manière thermoréversible, ceci ce traduit par des viscosités plus faibles pour les compositions bitume/polymère selon l'invention.

Les compositions bitume/polymère comprenant les polymères greffés peuvent être destinés à la fabrication d'enrobés, d'enduits superficiels (applications routières) ou de membranes, chapes d'étanchéité (applications industrielles).

L'enrobé bitumineux comprend de 1 à 10 % en masse de composition bitume/polymère, par rapport à la masse totale de l'enrobé, de préférence de 4 à 8% en masse.

L'utilisation de polymères greffés dans les compositions bitume/polymère, lors de la fabrication d'un enrobé, permet de diminuer les températures de fabrication ou d'enrobage, de répandage et de compactage par rapport aux températures utilisées habituellement, et ce grâce à une réticulation thermoréversible.

**EXEMPLES**

On prépare des polymères greffés et des compositions bitume/polymère à partir de :

- bitume de pénétrabilité égale à 53 1/10 mm selon la norme EN 1426,
- copolymère diséquencé styrène/butadiène SB$_0$ à charnière statistique ayant une masse $M_w$ égale à 120 000 g.mol$^{-1}$, une masse $M_n$ égale à 115 000 g.mol$^{-1}$, une quantité en masse de styrène de 23%, par rapport à la masse du copolymère, dont 18% sous forme de bloc et une quantité en masse de butadiène de 77%, par rapport à la masse du copolymère, la quantité en masse de motifs à double liaison 1-2 issus du butadiène étant de 7% par rapport à la quantité en masse de butadiène,
- copolymère diséquencé styrène/butadiène SB$_1$ à charnière statistique ayant une masse $M_w$ égale 130 000 g.mol$^{-1}$, une masse $M_n$ égale 125 000 g.mol$^{-1}$, une quantité de styrène en masse, par rapport à la masse du copolymère, de 30% dont 19% sous forme de bloc et une quantité en masse de butadiène de 70%, par rapport à la masse du copolymère, la quantité de motifs à double liaison 1-2 issus du butadiène étant de 15% par rapport à la quantité en masse de butadiène,
- dérivé thiol de formule $C_{18}H_{37}$-SH.

## Polymère greffé $PG_1$ (témoin)

Dans un ballon tricol de 250 ml équipé d'un réfrigérant et d'une arrivée d'azote, on introduit 100 ml de toluène, le solvant est dégazé pendant 30 minutes sous barbotage d'azote. On introduit ensuite 4 g de copolymère $SB_1$ ($5,19x10^{-2}$ mol de butadiène dont $1,10x10^{-2}$ mol de butadiène 1-2) et on le laisse se solubiliser sous agitation de type magnétique à 400 tours/min pendant une heure. On introduit ensuite 3,17 g de dérivé thiol ($1,10x10^{-2}$ mol) puis 18,1 mg ($1,10x10^{-4}$ mol) d'amorceur radicalaire azobisisobutyronitrile (AIBN). La solution est portée à 90°C, toujours sous atmosphère inerte pendant 3h30. A la fin de la réaction, on éteint le chauffage en enlevant le ballon du bain d'huile et l'azote et on laisse refroidir à température ambiante, après avoir ajouté dans le milieu réactionnel 4 mg de BHT (2,6-di-tert-butyl-4-méthyl-phénol).

## Polymère greffé $PG_2$ (témoin)

On procède de la même façon que pour le polymère greffé $PG_1$ en effectuant une étape ultérieure de purification. On précipite 100 ml de solution dans 800 ml de méthanol. Le précipité est récupéré par filtration et resolubilisé dans 25 ml de toluène pour effectuer l'ajout de l'antioxydant (4 mg de BHT). La solution est ensuite versée dans un moule en téflon et laissée évaporer sous la hotte pendant 48h.

## Polymère greffé $PG_3$ (selon l'invention)

Dans un réacteur de 250 ml équipé d'une agitation mécanique, d'une entrée et d'une sortie d'azote, on introduit 15,8 g de dérivé thiol ($5,52x10^{-2}$ mol) ainsi que 20g de copolymère $SB_1$ ($2,59x10^{-1}$ mol de butadiène dont $5,52x10^{-2}$ mol de butadiène 1-2). On agite le mélange à 50 tours/min pendant 4h à 40°C sous atmosphère inerte. On augmente la température à 100°C. On agite le mélange à 50 tours/min pendant 24h sous atmosphère inerte. On arrête l'agitation et on refroidit le mélange à température ambiante sous atmosphère inerte. On ajoute du toluène dans le réacteur de façon à obtenir une solution à 4% massique et on introduit l'antioxydant BHT à 1/1000 % en masse par rapport au copolymère. On verse la solution dans un moule en téflon, puis on laisse le solvant s'évaporer à température ambiante.

## Polymère greffé $PG_4$ (selon l'invention)

On procède de la même façon que pour le polymère greffé $PG_3$ en effectuant une étape ultérieure de purification. Une fois les 2 étapes réactionnelles effectuées, on arrête l'agitation et on refroidit le mélange à température ambiante sous atmosphère inerte. On précipite 100 ml de la solution dans 800 ml de méthanol. On récupère le copolymère greffé et on le fait sécher 1h à température ambiante. On dissout le copolymère dans du toluène puis on ajoute le BHT. On verse la solution dans un moule en téflon, puis on laisse le solvant s'évaporer à température ambiante.

Les résultats sont regroupés dans le tableau I ci-dessous.

Tableau I

| Copolymère | $SB_1$ | $PG_1$ | $PG_2$ | $PG_3$ | $PG_4$ |
|---|---|---|---|---|---|
| $M_n$ (kg/mol) | 125 | 165 | 140 | 85 | 87 |
| $M_w$ (kg/mol) | 130 | 320 | 320 | 130 | 140 |
| $I = M_w/M_n$ | 1,04 | 1,94 | 2,28 | 1,53 | 1,61 |
| % molaire C18 | - | - | 6,8 | - | 12,3 |
| % massique C18 | - | - | 23,6 | - | 35,9 |
| Rendement de greffage | - | - | 39,0 | - | 71,0 |

On constate que le rendement de greffage est plus élevé lorsqu'on utilise le procédé selon l'invention, plutôt que le procédé en solution de l'art antérieur.

On constate aussi que les indices de polydispersité des polymères greffés évoluent beaucoup plus lorsque les polymères greffés sont synthétisés en solution comme c'est le cas dans l'art antérieur. Les indices de polydispersité des polymères greffés synthétisés d'après le procédé selon l'invention sans solvant et sans amorceur radicalaire sont inférieurs à ceux des polymères greffés synthétisés en solution.

Le procédé selon l'invention a donc l'avantage d'être plus simple à mettre en oeuvre et de donner des rendements plus élevés. De plus il fournit des polymères greffés de polydispersité plus faible.

On prépare ensuite des compositions bitume/polymère à partir des polymères greffés obtenus ci-dessus et du bitume décrit ci-dessus.

Composition bitume/polymère témoin $T_0$

On prépare une composition bitume/polymère témoin $T_0$ dans laquelle la composition bitume/polymère est réticulée au soufre (vulcanisation).

Dans un réacteur maintenu à 185°C et sous agitation à 300 tours/min, on introduit 94,87% en masse de bitume et 5% en masse du copolymère $SB_0$. Le contenu du réacteur est ensuite maintenu à 185°C sous agitation à 300 tours/min pendant 4 heures. On introduit ensuite dans le réacteur 0,13 % en masse de soufre en fleur, par rapport à la masse de la composition bitume/polymère. Le contenu du réacteur est maintenu à 185°C sous agitation à 300 tours/min pendant 2 heures.

Composition bitume/polymère témoin $T_1$

On prépare une composition bitume/polymère témoin $T_1$ dans laquelle la composition bitume/polymère est réticulée à l'aide d'un polymère greffé témoin $PG_1$ obtenu en solution.

Dans un réacteur maintenu à 185°C et sous agitation à 300 tours/min, on introduit 93,17% en masse de bitume et 6,83% en masse du polymère greffé $PG_1$. Le contenu du réacteur est ensuite maintenu à 185°C sous agitation à 300 tours/min pendant 4 heures.

Composition bitume/polymère témoin $T_2$

On prépare une composition bitume/polymère témoin $T_2$ dans laquelle la composition bitume/polymère est réticulée à l'aide d'un polymère greffé témoin $PG_2$ obtenu en solution.

Dans un réacteur maintenu à 185°C et sous agitation à 300 tours/min, on introduit 95% en masse de bitume et 5% en masse du polymère greffé $PG_2$. Le contenu du réacteur est ensuite maintenu à 185°C sous agitation à 300 tours/min pendant 4 heures.

Composition bitume/polymère selon l'invention $C_3$

On prépare une composition bitume/polymère selon l'invention $C_3$ dans laquelle la composition bitume/polymère est réticulée à l'aide d'un polymère greffé selon l'invention $PG_3$.

Dans un réacteur maintenu à 185°C et sous agitation à 300 tours/min, on introduit 94,23% en masse de bitume et 5,73% en masse du polymère greffé $PG_3$. Le contenu du réacteur est ensuite maintenu à 185°C sous agitation à 300 tours/min pendant 4 heures.

Composition bitume/polymère selon l'invention $C_4$

On prépare une composition bitume/polymère selon l'invention $C_4$ dans laquelle la composition bitume/polymère est réticulée à l'aide d'un polymère greffé selon l'invention $PG_4$.

Dans un réacteur maintenu à 185°C et sous agitation à 300 tours/min, on introduit 95% en masse de bitume et 5% en masse du polymère greffé $PG_4$. Le contenu du réacteur est ensuite maintenu à 185°C sous agitation à 300 tours/min pendant 4 heures.

Les résultats sont regroupés dans le Tableau 2 ci-dessous.

| Tableau 2 | $T_0$ | $T_1$ | $T_2$ | $C_3$ | $C_4$ |
|---|---|---|---|---|---|
| $P_{25}$ (1/10 mm) [(1)] | 36 | 73 | 49 | 59 | 50 |
| TBA (°C) [(2)] | 64,2 | 64,4 | 69,9 | 51,6 | 54,4 |
| IP [(3)] | 1,0 | 2,9 | 2,8 | -0,4 | -0,2 |
| σ seuil (MPa) [(4)] | 1,33 | 1,11 | 1,62 | 1,26 | 1,35 |
| σ ε max (MPa) [(4)] | 0,6 | 0,28 | 0,47 | 0,20 | 0,27 |

(suite)

| Tableau 2 | $T_0$ | $T_1$ | $T_2$ | $C_3$ | $C_4$ |
|---|---|---|---|---|---|
| ε seuil (%) [4] | 13,6 | 12,44 | 11,02 | 11,52 | 10,93 |
| ε max (%) [4] | 700 | 700 | 700 | 641 | 700 |
| E 400% (J/cm$^2$) [4] | 12 | 8,20 | 12,13 | 9,19 | 9,92 |
| E totale (J) [4] | 2,45 | 1,42 | 2,24 | 1,64 | 1,80 |
| Viscosité 80°C (Pa.s) [5] | 65,00 | 33,00 | 55,00 | 31,00 | 27,00 |
| Viscosité 100°C (Pa.s) [5] | 17,49 | 9,75 | 13,70 | 8,25 | 9,15 |
| Viscosité 120°C (Pa.s) [5] | 4,80 | 2,61 | 3,63 | 2,15 | 2,30 |
| Viscosité 140°C (Pa.s) [5] | 1,61 | 0,93 | 1,20 | 0,78 | 0,81 |
| Viscosité 160°C (Pa.s) [5] | 0,69 | 0,42 | 0,52 | 0,35 | 0,36 |
| Viscosité 180°C (Pa.s) [5] | 0,34 | 0,22 | 0,26 | 0,18 | 0,19 |
| Viscosité 200°C (Pa.s) [5] | 0,20 | 0,13 | 0,16 | 0,11 | 0,11 |

[1] pénétrabilité à 25°C notée $P_{25}$ (1/10 mm) mesurée selon la norme EN 1426,

[2] température Bille et Anneau notée TBA (°C) mesurée selon la norme EN 1427

[3] indice de Pfeiffer noté IP défini par la formule suivante :

$$IP = \frac{1952 - 500 \times \log(P_{25}) - 20 \times TBA}{50 \times \log(P_{25}) - TBA - 120}$$

[4] contrainte seuil notée σ seuil (MPa), contrainte à l'élongation maximale notée. σ ε max (MPa), élongation seuil notée ε seuil (%), élongation maximale notée ε max (%), énergie conventionnelle d'élongation à 400% notée E 400% (J/cm$^2$), énergie totale notée E totale (J), mesurées selon la norme NF EN 13587, l'essai de traction étant réalisé à 5°C avec une vitesse d'étirement de 500 mm/minute,

[5] viscosités à différentes températures (Pa.s) mesurées selon la norme NF EN 13702-1.

Les résultats de ce tableau montrent que les viscosités de 80°C à 200°C des compositions bitume/polymère selon l'invention $C_3$ et $C_4$, sont toujours inférieures à celles de la composition témoin $T_0$. Les compositions bitume/polymère selon l'invention $C_3$ et $C_4$ sont donc moins visqueuses qu'une composition bitume/polymère réticulé au soufre. De faibles viscosités aux températures de mise en oeuvre sont donc atteintes grâce aux compositions bitume/polymère selon l'invention. Des réductions de l'ordre de 20°C sont obtenues grâce aux compositions bitume/polymère selon l'invention. Il sera possible de fabriquer à des températures plus basses, des enrobés à partir des compositions bitume/polymère selon l'invention.

De plus, on constate que les propriétés élastiques des compositions bitume/polymère selon l'invention sont très satisfaisantes et très proches de celles de la composition témoin $T_0$. Aux températures d'usage, les compositions bitume/polymère selon l'invention $C_3$ et $C_4$ sont donc élastiques (tout comme les compositions témoins $T_0$, $T_1$ et $T_2$), tout en présentant une viscosité réduite aux températures de mise en oeuvre par rapport aux compositions témoins $T_0$, $T_1$ et $T_2$ qui elles sont beaucoup plus visqueuses.

**Revendications**

1.  Procédé de préparation de polymères greffés en l'absence de solvant et de source radicalaire comprenant les étapes suivantes :

    (i) on met en contact un dérivé thiol et un polymère à base de motifs diène conjugué à une température comprise entre 20°C et 120°C, pendant une durée de 10 minutes à 24 heures, puis
    (ii) on porte le mélange à une température comprise entre 80°C et 200°C pendant une durée de 10 minutes à 48 heures.

**2.** Procédé de préparation selon la revendication 1 dans lequel la température de l'étape (i) est comprise entre 40°C et 100°C et la température de l'étape (ii) est comprise entre 120°C et 140°C.

**3.** Procédé de préparation selon l'une quelconque des revendications 1 à 2 dans lequel une étape ultérieure de purification est mise en oeuvre.

**4.** Procédé de préparation selon l'une quelconque des revendications 1 à 3 dans lequel les étapes (i) et/ou (ii) sont effectuées sous agitation.

**5.** Procédé de préparation selon l'une quelconque des revendications 1 à 4 dans lequel le dérivé thiol a pour formule générale $C_nH_{2n+1}$-SH avec n un entier compris entre 12 et 110, de préférence entre 18 et 90, plus préférentiellement entre 22 et 80, encore plus préférentiellement entre 40 et 70.

**6.** Procédé de préparation selon l'une quelconque des revendications 1 à 5 dans lequel le polymère est un copolymère à base de motifs diène conjugué et de motifs hydrocarbure monovinyl aromatique.

**7.** Procédé de préparation selon l'une quelconque des revendications 1 à 6 dans lequel le polymère à base de motifs diène conjugué possède une teneur en motifs à doubles liaisons 1-2 issus du diène conjugué entre 5% et 50% en masse, par rapport à la masse totale des motifs diène conjugué, de préférence entre 10% et 40%, plus préférentiellement entre 15% et 30%, encore plus préférentiellement entre 20% et 25%, encore plus préférentiellement entre 18% et 23%.

**8.** Procédé de préparation selon l'une quelconque des revendications 1 à 7 dans lequel le rapport molaire entre la quantité de dérivé thiol et la quantité de motifs à doubles liaisons 1-2 issus du diène conjugué est compris entre 0,01 et 5, de préférence entre 0,05 et 4, plus préférentiellement entre 0,1 et 2, encore plus préférentiellement entre 0,5 et 1,5, encore plus préférentiellement entre 0,8 et 1.

**9.** Polymère greffé susceptible d'être obtenu par le procédé selon l'une quelconque des revendications 1 à 8.

**10.** Polymère greffé selon la revendication 9 ayant un indice de polydispersité compris entre 1 et 4, de préférence entre 1,1 et 3, plus préférentiellement entre 1,2 et 2, encore plus préférentiellement entre 1,5 et 1,7.

**11.** Composition bitume/polymère comprenant au moins un bitume et au moins un polymère greffé susceptible d'être obtenu par le procédé selon l'une quelconque des revendications 1 à 8.

**12.** Composition bitume/polymère selon la revendication 11 comprenant de 0,1% à 30% en masse de polymère greffé par rapport à la masse de la composition bitume/polymère, de préférence entre 0,5% et 20%, plus préférentiellement entre 1% et 10%, encore plus préférentiellement entre 2% et 5%.

**13.** Procédé de préparation d'une composition bitume/polymère selon la revendication 11 ou 12 dans lequel on mélange à une température comprise entre 100°C et 200°C, de préférence entre 120°C et 180°C, plus préférentiellement entre 140°C et 160°C, jusqu'à l'obtention d'une composition bitume/polymère finale réticulée, au moins un bitume et au moins un polymère greffé susceptible d'être obtenu par le procédé selon l'une quelconque des revendications 1 à 8.

**14.** Utilisation d'au moins un polymère greffé susceptible d'être obtenu par le procédé selon l'une quelconque des revendications 1 à 8 pour préparer une composition bitume/polymère réticulée, de préférence de manière thermoréversible.

**15.** Enrobé bitumineux comprenant des granulats et une composition bitume/polymère selon la revendication 11 ou 12.

**Patentansprüche**

**1.** Herstellungsverfahren gepfropfter Polymere in Abwesenheit von Lösungsmittel und Radikalquelle, das die folgenden Schritte umfasst:

(i) Inkontaktversetzen eines Thiolderivats und eines Polymers auf der Basis von Motiven konjugierten Diens bei einer Temperatur zwischen 20 °C und 120 °C inklusive während einer Dauer von 10 Minuten bis 24 Stunden, dann

(ii) Bringen des Gemischs auf eine Temperatur zwischen 80 °C und 200 °C inklusive während einer Dauer von 10 Minuten bis 48 Stunden.

2. Herstellungsverfahren nach Anspruch 1, wobei die Temperatur von Schritt (i) zwischen 40 °C und 100 °C inklusive ist und die Temperatur von Schritt (ii) zwischen 120 °C und 140 °C inklusive ist.

3. Herstellungsverfahren nach einem der Ansprüche 1 bis 2, wobei ein weiterer Reinigungsschritt durchgeführt wird.

4. Herstellungsverfahren nach einem der Ansprüche 1 bis 3, wobei die Schritte (i) und/oder (ii) unter Rühren durchgeführt werden.

5. Herstellungsverfahren nach einem der Ansprüche 1 bis 4, wobei das Thiolderivat die allgemeine Formel $C_nH_{2n+1}$-SH hat mit n als Ganzzahl zwischen 12 und 110, vorzugsweise zwischen 18 und 90, in bevorzugterer Weise zwischen 22 und 80, in noch bevorzugterer Weise zwischen 40 und 70, inklusive.

6. Herstellungsverfahren nach einem der Ansprüche 1 bis 5, wobei das Polymer ein Copolymer ist auf der Basis von Motiven konjugierten Diens und von Motiven aromatischen Monovinyl-Kohlenwasserstoffs.

7. Herstellungsverfahren nach einem der Ansprüche 1 bis 6, wobei das Polymer auf der Basis von Motiven konjugierten Diens einen Anteil an Motiven mit Doppelbindungen 1-2, hervorgegangen aus dem konjugierten Dien, zwischen 5 und 50 Massenprozent im Verhältnis zur Gesamtmasse der Motive konjugierten Diens, vorzugsweise zwischen 10 % und 40 %, in bevorzugterer Weise zwischen 15 % und 30 %, in noch bevorzugterer Weise zwischen 20 % und 25 %, in noch bevorzugterer Weise zwischen 18 % und 23 %, besitzt.

8. Herstellungsverfahren nach einem der Ansprüche 1 bis 7, wobei das molare Verhältnis zwischen der Thiolderivatmenge und der Motivmenge mit Doppelbindungen 1-2, hervorgegangen aus dem konjugierten Dien, zwischen 0,01 und 5, vorzugsweise zwischen 0,05 und 4, in bevorzugterer Weise zwischen 0,1 und 2, in noch bevorzugterer Weise zwischen 0,5 und 1,5, in noch bevorzugterer Weise zwischen 0,8 und 1, inklusive ist.

9. Gepfropftes Polymer, das durch das Verfahren nach einem der Ansprüche 1 bis 8 herstellbar ist.

10. Gepfropftes Polymer nach Anspruch 9 mit einem Polydispersitätsindex zwischen 1 und 4, vorzugsweise zwischen 1,1 und 3, in bevorzugterer Weise zwischen 1,2 und 2, in noch bevorzugterer Weise zwischen 1,5 und 1,7, inklusive.

11. Bitumen/Polymer-Zusammensetzung, die mindestens ein Bitumen und mindestens ein gepfropftes Polymer, herstellbar nach dem Verfahren nach einem der Ansprüche 1 bis 8, umfasst.

12. Bitumen/Polymer-Zusammensetzung nach Anspruch 11, die 0,1 bis 30 Massenprozent gepfropftes Polymer im Verhältnis zur Masse der Bitumen/Polymer-Zusammensetzung, vorzugsweise zwischen 0,5 % und 20 %, in bevorzugterer Weise zwischen 1 % und 10 %, in noch bevorzugterer Weise zwischen 2 % und 5 %, umfasst.

13. Herstellungsverfahren einer Bitumen/Polymer-Zusammensetzung nach Anspruch 11 oder 12, wobei bei einer Temperatur zwischen 100 °C und 200 °C, vorzugsweise zwischen 120 °C und 180 °C, in bevorzugterer Weise zwischen 140 °C und 160 °C inklusive bis zum Erhalt einer endgültigen vernetzten Bitumen/Polymer-Zusammensetzung mindestens, ein Bitumen und mindestens ein gepfropftes Polymer herstellbar nach dem Verfahren nach einem der Ansprüche 1 bis 8, gemischt werden.

14. Verwendung mindestens eines gepfropften Polymers, herstellbar nach dem Verfahren nach einem der Ansprüche 1 bis 8, zur Herstellung einer vorzugsweise thermisch reversiblen vernetzten Bitumen/Polymer-Zusammensetzung.

15. Bituminöser Asphalt, der Granulate und eine Bitumen/Polymer-Zusammensetzung nach Anspruch 11 oder 12 umfasst.

**Claims**

1. Process for preparing graft polymers in the absence of solvent and of a source of radicals comprising the following steps:

   (i) a thiol derivative is brought into contact with a polymer based on conjugated diene units at a temperature comprised between 20°C and 120°C, for a duration of 10 minutes to 24 hours, then
   (ii) the mixture is heated at a temperature comprised between 80°C and 200°C for a duration of 10 minutes to 48 hours.

2. Process of preparation according to claim 1, **characterized in that** the temperature of step (i) is comprised between 40°C and 100°C, and the temperature of step (ii) is comprised between 120°C and 140°C.

3. Process of preparation according to any one of claims 1 to 2, **characterized in that** a subsequent purification step is implemented.

4. Process of preparation according to any one of claims 1 to 3, **characterized in that** steps (i) and/or (ii) are carried out with stirring.

5. Process of preparation according to any one of claims 1 to 4, **characterized in that** the thiol derivative has the general formula $C_nH_{2n+1}$-SH where n is an integer comprised between 12 and 110, preferably between 18 and 90, more preferably between 22 and 80, and even more preferably between 40 and 70.

6. Process of preparation according to any one of claims 1 to 5, **characterized in that** the polymer is a copolymer based on conjugated diene units and aromatic monovinyl hydrocarbon units.

7. Process of preparation according to any one of claims 1 to 6, **characterized in that** the polymer based on conjugated diene units has a content of units with 1,2 double bonds originating from the conjugated diene between 5 and 50% by weight, relative to the total weight of the conjugated diene units, preferably between 10% and 40%, more preferably between 15% and 30%, even more preferably between 20% and 25%, and even more preferably between 18% and 23%.

8. Process of preparation according to any one of claims 1 to 7, **characterized in that** the molar ratio of the quantity of thiol derivative to the quantity of units with 1,2 double bonds originating from the conjugated diene is comprised between 0.01 and 5, preferably between 0.05 and 4, more preferably between 0.1 and 2, even more preferably between 0.5 and 1.5, and even more preferably between 0.8 and 1.

9. Graft polymer that can be obtained by the process according to any one of claims 1 to 8.

10. Graft polymer according to claim 9 having a polydispersity index comprised between 1 and 4, preferably between 1.1 and 3, more preferably between 1.2 and 2, and even more preferably between 1.5 and 1.7.

11. Bitumen/polymer composition comprising at least one bitumen and at least one graft polymer that can be obtained by the process according to any one of claims 1 to 8.

12. Bitumen/polymer composition according to claim 11 comprising from 0.1 to 30% by weight of graft polymer relative to the weight of the bitumen/polymer composition, preferably between 0.5% and 20%, more preferably between 1% and 10%, and even more preferably between 2% and 5%.

13. Process for preparing a bitumen/polymer composition according to claim 11 or 12, **characterized in that** at least one bitumen and at least one graft polymer that can be obtained by the process according to any one of claims 1 to 8 are mixed at a temperature comprised between 100°C and 200°C, preferably between 120°C and 180°C, more preferably between 140°C and 160°C, until a final cross-linked bitumen/polymer composition is obtained.

14. Use of at least one graft polymer that can be obtained by the process according to any one of claims 1 to 8 for preparing a bitumen/polymer composition that is cross-linked, preferably thermoreversibly.

15. Bituminous coated material comprising aggregates and a bitumen/polymer composition according to claim 11 or 12.

**EP 2 593 484 B1**

## RÉFÉRENCES CITÉES DANS LA DESCRIPTION

**Documents brevets cités dans la description**

- WO 200930840 A

- WO 200930841 A